# EUROPEAN PATENT APPLICATION

(11) **EP 2 312 012 A1**
(43) Date of publication of application: **20.04.2011**
(21) Application number: 10251788.5
(22) Date of filing: 13.10.2010
(51) Int. Cl.: C23C 4/02, C23C 4/12, C23C 4/18

(54) **Method for producing a crack-free abradable coating with enhanced adhesion**

(30) Priority: 30.09.2010 US 895114; 13.10.2009 US 251115 P
(71) Applicant: Walbar Inc., Peabody, MA 01960-3369 (US)
(72) Inventor: Ma, Xinqing, Willington, CT 06279 (US)
(74) Representative: Hargreaves, Timothy Edward

(57) **Abstract**

The present invention provides methods for producing a crack-free abradable coating with enhanced adhesion. The methods include the steps of providing a substrate and applying an abradable material to the substrate, either directly or indirectly via one or more additional layers. A critical coating temperature of the abradable material is determined that ensures that the thermal stress level in the abradable material is lower than the tensile strength of the abradable material. The temperature of the abradable material is held at a constant temperature below the critical coating temperature throughout the step of applying the abradable material to the substrate.

## Description

### RELATED APPLICATIONS/INCORPORATION BY REFERENCE

This application claims priority to U.S. Provisional Application Serial No. 61/251,115, filed October 13, 2009 and US Patent Application No. 12/895,114 filed 30 September 2010, the entire contents of which are incorporated herein by reference.

All documents cited or referenced herein and all documents cited or referenced in the herein cited documents, together with any manufacturer's instructions, descriptions, product specifications, and product sheets for any products mentioned herein or in any document incorporated by reference herein, are hereby incorporated by reference, and may be employed in the practice of the invention.

### BACKGROUND OF THE INVENTION

### 1. Field of the Invention

This invention relates to a method of fabricating a durable coating with abradability properties onto a metal or composite substrate. The invention can be used with turbine engines; however, the concepts of the invention are intended to have a wider applicability both within the turbine engine industry and within other industries as well.

### 2. Background

Gas turbine engines are well known and can be used for a wide variety of purposes, including aircraft propulsion, electrical power generation, turboshaft engines (e.g., for use in gas pumping stations), and other forms of land and maritime locomotion. A typical gas turbine engine extracts useful energy from a flow of combustion gases and includes an upstream compressor coupled to a downstream turbine, with a combustion chamber positioned between the compressor and the turbine. Energy is added to the gas stream in the combustor by igniting an air and fuel mixture, which creates substantially high temperatures and pressures. The combustion products are forced with high velocity into the turbine section downstream of the combustion chamber, causing the blades of the turbine to spin, driving its mechanical output. This output of energy can be in the form of shaft power, compressed air, and thrust, in any combination.

The compressor and turbine sections of a typical gas turbine engine each include shaft-mounted, rotating disks, each carrying a set of blades (i.e., buckets) located within a hollow housing or ease, with intervening sets of stationary vanes (i.e., nozzles) mounted to the case. Air seals are provided between the tips of the blades and the case, and between the vanes and the disks to prevent air leakage between these components.

Air is ingested through an engine inlet and compressed by rotating disks and associated blades in the compressor. The compressed air is then combined with fuel and ignited in the combustor to generate high pressure and temperature gases, which cause rotation of the turbine sections and associated fan compressor stages. The gases are then ejected out an engine exhaust to provide thrust. The case is designed to prevent leakage of air or combustion products around the tips of the blades, i.e., between the blade tips and the case, because leakage reduces the efficiency of the engine.

Despite the design of components to minimize leakage, leakage of air and combustion products still occurs. In a normally-operating gas turbine engine, leakage typically occurs between the tips of the blades and the case, and between the tips of the vanes and the disks. One manner of eliminating such leakage is to fabricate all mating parts to extremely close tolerances, which becomes increasingly expensive as tolerances are reduced. Moreover, given the temperature ranges to which the parts are exposed before, during, and after operation, and given the resultant thermal expansion and contraction of the parts, such close tolerances would likely lead to interference between mating parts and corresponding wear of the components, as well as other damage.

Accordingly, gas turbine engine designers have devoted significant effort to developing effective air seals, and particularly seals composed of abradable materials. Such seals require a balance of several properties including abradability upon being contacted by a rotating blade tip, erosion resistance, durability, thermal expansion balanced with that of the underlying material, and relative ease and reasonable cost of manufacture. To the extent that the seal is employed at elevated temperatures, the abradable seal material must also be stable over a relatively wide temperature range and thermally insulate the underlying substrate. The longevity of abradable seals is impacted in part by the level of stress introduced during the formation or production phase.

A typical abradable air seal includes a metallic bond coat, e.g., a MCrAlY or aluminide bond coat, and a porous ceramic abradable layer, such as yttria-stabilized zirconia (YSZ) having a controlled amount of porosity. Thermal spray methods are widely used to apply abradable coatings; however, due to the high temperatures and mismatched coefficients of thermal expansion (CTEs) among the materials used to form the coatings, cracks can form in the abradable layer materials, as well as in any underlying coating layers and even in the substrate itself. These cracks formed during the production phase can potentially increase in size and merge into one another, leading to debonding, buckling, peeling, spalling, and mass destruction of the abradable material during its use. The cracks tend to decrease the integrity of the abradable materials and reduce the overall longevity of the gas turbine components coated by these materials.

A process for fabricating an improved abradable layer directly or indirectly (via underlying or intermediate layers) on a substrate, such as on the housing or case of the turbine section of a typical gas turbine engine or other substrate of interest, such that the formation of cracks during production is substantially avoided or mitigated, would readily advance the art. The present invention provides such a process.

### SUMMARY OF THE INVENTION

The purpose and advantages of the present invention will be set forth in and apparent from the description that follows. Additional advantages of the invention will be realized and attained by the methods and systems particularly pointed out in the written description and claims hereof, as well as from the appended drawings.

The present invention relates to a new process for preparing and fabricating abradable coatings that have enhanced durability and longevity during operation due to the avoidance or mitigation of crack formation in the abradable material during the production stage of the coatings of the invention.

The invention can be used with gas turbine engines; however, the concepts of the invention are intended to have a wider applicability both within the gas turbine engine industry and other industries as well. The concepts of the invention can be adapted for use with any abradable coating system.

Accordingly, the present invention provides a method for producing a crack-free abradable coating, comprising: applying an abradable material directly or indirectly via an intermediate layer to a substrate, wherein the abradable material is maintained at a temperature that is lower than the critical coating temperature as it is being applied to the substrate or intermediate layer, thereby forming a crack-free abradable coating.

In another aspect, the present invention relates to methods for producing a crack-free abradable coating, the method comprising the steps of providing a substrate and applying a bondcoat to the substrate. The method optionally further involves applying an intermediate layer to the bondcoat. An abradable layer is then applied directly to the substrate or the intermediate layer, wherein the abradable material is maintained at a temperature that is lower than the critical coating temperature as it is being applied to the substrate or intermediate layer, thereby forming a crack-free abradable coating.

In some embodiments, the substrate is a metal, alloy or ceramic. In other embodiments, the substrate is a component of a gas turbine engine.

In still further embodiments, the abradable material comprises a fugitive component and a metallic or ceramic matrix component.

In still other embodiments, the present invention provides a method according to claim 1, wherein the step of applying the abradable material is by thermal spraying, including by plasma spray and high-velocity oxygen-fuel (HVOF) spraying.

The critical coating temperature (Tc) can be determined experimentally, including by the method of (a) applying the abradable material to the substrate while maintaining the abradable material at a constant coating temperature, thereby forming an abradable coating, followed by (b) cooling the abradable coating. The abradable coating is then (c) inspected to determine the presence or absence of cracks. These steps (a)-(c) over a range of constant coating temperatures, wherein the highest coating temperature at which cracks are not detected is the critical coating temperature. The range in constant coating temperatures may be from about 300°F to about 2300°F.

In yet another embodiment, the one or more intermediate layers can be selected from the group consisting of a bondcoat, a thermal barrier coat (TBC), a thermally grown oxide coat, and a ceramic coat.

In certain embodiments, the one or more intermediate layers has a graded composition and porosity. In other embodiments, the intermediate layers have an even composition and porosity.

In still further embodiments, the abradable coating is formed at a thickness of about between 0.1 to 1.0 millimeters, or about between 0.5 to 5 millimeters, or about between 1.0 to 50 millimeters or more.

Any feature in one aspect or embodiment may be applied to any other aspect or embodiment, in any appropriate combination. Features from any suitable combination of independent or dependent claims may be combined in further embodiments regardless of the dependency of those claims, and regardless of whether those claims are interdependent.

The accompanying drawings, which are incorporated in and constitute part of this specification, are included to illustrate and provide a further understanding of the method and system of the invention. Together with the description, the drawings serve to explain the principles of the invention.

### BRIEF DESCRIPTION OF THE DRAWINGS

So that those having ordinary skill in the art to which the subject invention pertains will more readily understand how to make and use the invention as described herein, preferred embodiments thereof will be described in detail below, with reference to the drawings, wherein:
**FIG. 1** shows a schematic for crack formation in an abradable coating during its fabrication.
**FIG. 1a** depicts cracks formed due to stress related thermal stress caused by unmatched coefficients of thermal expansion (CTE) likely in the region starting at the coating interface (with the substrate underlayer) as well inside the coating itself.
**FIG. 1b** depicts cracks formed due to weak connection or cohesion between the ceramic matrix phase and polymer-based fugitive phase of the abradable coating. Cracks can begin very small and narrow, but can further extend due to continued or additional strain on the layer to form larger cracks within the coating.
**FIG. 1c** depicts cracks formed due to extension of the vertical cracks in the underlayer into the abradable top layer.
**FIG. 2** shows various embodiments of the abradable coatings of the present invention.
**FIG. 2a** depicts conventional 2 or 3-layered abradable coating system, comprising either an abradable coating directly over a substrate (2-layer) or a abradable layer over a bondcoat layer on a substrate.
**FIG. 2b** depicts a multiple layered abradable coating with an intermediate layer or coating to improve the CTE match between the substrate and the abradable coat, as described further herein.
**FIG. 2c** depicts a multiple layered abradable coating with an intermediate layer that is a continuously graded layer so as to improve CTE match and bond strength, as described further herein.
**FIG. 3** provides a photomicrograph showing the microstructure of a crack-free abradable coating of the invention applied on a metallic bondcoat, as described further in Example 1.
**FIG. 4** provides a photomicrograph showing the microstructure of a crack-free abradable coating of the invention applied on a metallic bondcoat, as described further in Example 2.
**FIG. 5** provides a photomicrograph showing the microstructure of a crack-free abradable coating of the invention applied on a superalloy substrate, as described further in Example 3.
**FIG. 6** provides a photomicrograph showing the microstructure of a multi-layer crack-free abradable coating of the invention applied on a DVC-TBC, as further described in Example 4.
**FIG. 7** provides a photomicrograph showing the microstructure of a crack-free abradable coating with a denser and graded intermediate layer of the same starting material as the abradable coating material applied on a normal TBC, as further described in Example 6.
**FIG. 8** provides a photomicrograph showing the microstructure of a crack-free and adhesive abradable coating with a denser intermediate layer of the same starting material as the abradable coating material applied on a DVC-TBC, as further described in Example 5.
**FIG. 9** provides a photomicrograph showing the microstructure of a crack-free abradable coating with a graded intermediate layer of the same starting material as the abradable coating material applied over a normal TBC with a HVOF bondcoat, as further described in Example 7.

### DESCRIPTION OF THE INVENTION

The present invention relates to a method of fabricating durable, crack-free abradable coatings with improved adhesion properties onto metal or composite substrates. The coatings of the invention are fabricated in a manner that results in resistance to the cracking, debonding, buckling, peeling and spallation, etc., of the abradable coating during high temperature and pressure treatment and service operation. The invention can be used with gas turbine engines; however, the concepts of the invention are intended to have a wider applicability both within the gas turbine engine industry and other industries as well. The concepts of the invention can be adapted for use with any abradable coating system.

It will be appreciated by those of ordinary skill in the art that the efficiency of a gas turbine engine is partially dependent on the radial clearance between rotating (i.e., bucket) and stationary (i.e., nozzle) components in the hot turbine section of a gas turbine engine. An abradable coating is typically used in a sealing assembly to provide air sealing and clearance control. An abradable coating can be deposited mostly on stationary components, and rotating components will contact and cut into the abradable coating to form a small clearance and an air seal. An abradable layer typically consists of a metallic or ceramic matrix and a fugitive phase, such as, but not limited to, polyester. Such coating materials will be well-known to the skilled artisan. The metallic or ceramic matrix provides coating integrity. The fugitive phase is sacrificed and removed when it comes into contact or rubs against the rotating counterpart.

Typically, abradable coatings are deposited either on a bondcoated substrate or over a thermal barrier coating (TBC) to provide oxidation resistance and thermal insulation, as well as clearance control, Thermal spray is widely used to apply abradable coatings. General methods for applying abradable coatings are known in the art and can be found, for example, in U.S. Patent Nos. 7,052,527 and 6,808,756, each of which is incorporated herein by reference. Similarly, general methods for applying thermal barrier coatings can be found, for example, in U.S. Patent Nos.: 7,622,195; 7,579,087; 7,501,187; 7,476,450; 7,455,913; 7,416,788; 7,413,798; 7,376,518; 7,298,818; 7,166,372; 7,150,926; 6,979,991; 6,974,637; 6,833,203; 6,635,124; 6,407,611; 6,585,878; 6,485,845; 6,485,844; 6,472,018; 6,447,854; 6,444,259; 6,382,920; 6,342,278; 6,284,323; 6,255,001; 6,231,991; 6,177,200; 6,117,560; 6,106,959; 6,001,492; 5,972,424; 5,912,087; 5,763,107; 5,667,663; 5,645,893; 5,538,796; 5,015,502; and 4,880,614, each of which is incorporated herein by reference.

The present invention provides a method for making an abradable coating without cracks and having improved adhesion characteristics owing to the fact that coating strength and integrity are enhanced. An abradable coating, particularly comprising a ceramic matrix phase and a fugitive phase, has low mechanical strength due to weak cohesion (i.e., the connection strength) between the two phases and the high porosity nature of the coating. Therefore, the coating is brittle and fragile and cracks easily under a relatively low mechanical or thermal load. Any pre-existing cracks in the coating can significantly affect and decrease the coating strength and integrity, and thus should be prevented during the coating process. The present invention solves these problems by developing a thermal management method to prevent the abradable coating from cracking during the coating process, i.e., during production of the coating. The key discovery is to keep the coating temperature below a pre-determined critical coating temperature Tc and to maintain the coating temperature as constant as possible during the process. In other words, the thermal management system is capable of maintaining the coating temperature as constant as possible and below the pre-deternimcd critical coating temperature, Tc.

Unless defined otherwise, all technical and scientific terms used herein have the meaning cammonly understood by one of ordinary skill in the art to which this invention belongs.

As used herein, the term "coating temperature" refers to the temperature of the material at the moment it becomes initially deposited onto the substrate or other underlayer over which it is to form a coating. The coating temperature can be regulated by any suitable means known to the skilled person, including, but not limited to, direct heating or cooling of the abradable material after it becomes deposited, or controlling the temperature of the abradable material as it exists the delivery device, e.g., plasma spray. Other methods are contemplated as well including simply adjusting the distance of the delivery device to the article or surface onto which the abradable material is being deposited.

As used herein, the term "critical coating temperature" or "Tc" is the threshold upper limit of the coating temperature. In other words, the coating temperature should never supress the critical coating temperature during the deposition of the material. Tc is determined experimentally to ensure that the thermal stress level is lower than the tensile strength of the abradable material. Process optimization integrated with a cooling technique has been developed and applied to control and maintain the coating temperature below Tc. Such process optimization for determining the critical coating temperature is described herein.

As used herein, the term "abradable layer" or "abradable material" refers to a metallic or ceramic matrix intermeshed with a fugitive phase, such as a polyester, which is designed to be sacrificed and removed upon contact with a rotating component. Abradable materials are well-known in the art.

As used herein, the term "fugitive phase" refers to a phase that disintegrates upon contact with a mechanical force, e.g., contact with a moving component, e.g. a turbine blade.

As used herein, the term "HVOF" refers to the known process of "High-Velocity Oxygen-Fuel" spraying, which is a known process that efficiently uses high kinetic energy and controlled thermal output to produce dense, low-porosity coatings that exhibit high bond strengths, low oxides and extremity fine as-sprayed finishes. The coatings can be sprayed to a thickness not normally associated with dense, thermal-sprayed coatings. This process uses an oxygen-fuel mixture. Depending on user requirements, propylene, propane, hydrogen or natural gas may be used as the fuel in gas-fueled spray systems and kerosene as the fuel in liquid-fueled systems. The coating material, in powdered form, is fed axially through the gun, generally using nitrogen as a carrier gas. The fuel is thoroughly mixed with oxygen within the gun and the mixture is then ejected from a nozzle and ignited outside the gun. The ignited gases surround and uniformly heat the powdered spray material as it exits the gun and is propelled to the workpiece surface. As a result of the high kinetic energy transferred to the particles through the HVOF process, the coating material generally does not need to be fully melted. Instead, the powder particles are in a molten state and flatten plastically as they impact the workpiece surface. The resulting coatings have very predictable chemistries that are homogeneous and have a fine granular structure. These coatings can survive harsh service conditions, particularly in wear and many corrosion applications, which greatly increase component service life. The smooth, as-sprayed surface, uniform chemistry and low porosity of the coating can be finished to very smooth surface profiles. Further description and use of HVOF can be found, for example, in U.S. Patent Nos.: 7,150,921; 7,132,166, 6,924,007; 6,886,757; 6,793,976; 6,581,446; 6,503,576; and 6,346,134, each of which is incorporated by reference herein in their entireties.

As used herein, the term coefficient of thermal expansion ("CTE") takes on its ordinary meaning and describes how the size of a solid object changes with a change in temperature. Specifically, it measures the fractional change in volume per degree of change in temperature at a constant pressure. It is a well-known thermodynamic property of a solid and is represented by the formula: α = I/V (dV/dT).

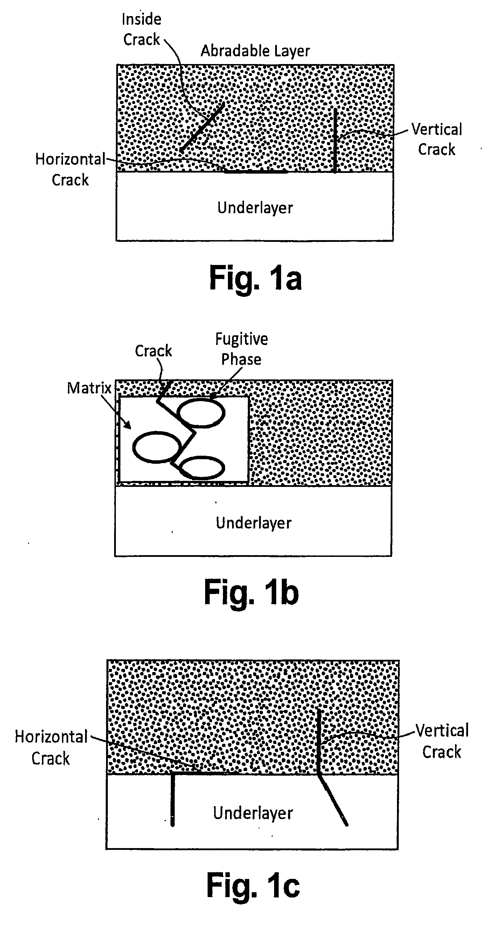

Cracks can be introduced into an abradable coating during the coating process in at least three ways: (1) the coating is exposed to a high temperature and CTE-associated thermal strain, which causes cracking to relieve the thermal stress (stress relaxation) (see Fig. 1a); (2) the ceramic matrix phase and the fugitive phase (such as plastic or polyester and the like) has a weak cohesion due to the nature of less bonding or wetting of the two materials, consequentially, very small hairline cracks can originate at the interface of the two phases and develop into much larger cracks under thermal stress (see Fig. 1b); (3) the under-laid coating such as thermal barrier coating (TBC) may contain some vertical cracks and the cracks can extend into the overlaid abradable coating (see Fig. 1c). The cracks are very detrimental for abradable coating performance and longevity when the cracks extend and connect together. Horizontal and vertical cracking is responsible for coating delamination, spallation, and coating mass loss.

Based on the understanding of crack formation in an abradable coating, the disclosed method includes developing a thermal management method to prevent the coating from cracking during the coating process by keeping the coating temperature below a predetermined critical coating temperature Tc and by maintaining the coating temperature as constant as possible during the process. The critical temperature Tc is determined experimentally to ensure that the thermal stress level is lower than the tensile strength of the abradable material. Process optimization integrated with a cooling technique has been developed and applied to control and maintain the coating temperature below Tc.

The invention contemplates any suitable experimental or empirical method for determining the critical temperature Tc. In one approach, the critical temperature Tc can be determined by first applying a "test" abradable material of interest to a substrate of interest while maintaining the abradable material at a constant coating temperature. For example, plasma spraying technique can be used to apply an abradable coating to a metal substrate or a bondcoat. The substrate and the characteristics of the test abradable coating (e.g., thickness, material used, coating temperature) as well as the parameters used for the layering process should match those features and parameters in the final abradable coating that is to be ultimately produced using the thermal management system. Once the test abradable material is deposited to form the coating, the coating is allowed to cool. Cooling can be passive (e.g., cooling at room temperature) or active (applying a cooling source). Next, the test abradable coating is inspected to determine the presence of cracks. Inspection can be by any suitable means, including for example by electron micrograph scanning. A determination must be made as to whether the layer shows the presence of cracks. The objective then is to repeat the above steps but at a range of temperatures. The highest temperature at which cracks do not appear is the critical coating temperature. A standard plot can be generated to be able to easily identify the Tc under various conditions.

In view of the above, several specific non-limiting embodiments are presented below to further illustrate the invention.

The present disclosure describes a process and method for making a crack-free and well-adhered abradable coating, especially including a metallic coat or TBC coat and a ceramic-matrix abradable top layer for gas turbine applications. The coating system with desirable microstructure and improved CTE match will ensure better coating integrity and improved spallation resistance when exposed to post heat treatment and an operative environment at elevated temperatures. The method described includes a method for making the abradable coating using thermal spray techniques, including high velocity oxygen fuel (HVOF) spray and plasma spray. The method is described in detail in the following sections and exemplary cases.

In conventional two or three layered abradable coating systems, the coefficients of thermal expansion (CTEs) of the coating materials can vary from 15-18 x10⁻⁶ m/°C for a metallic layer to 8-12 x10⁻⁶ m/°C for a ceramic and its composite layer. The CTE differences among the coating materials can have a thermal mismatch at high temperatures which results in coating failure in the form of cracking, buckling, debonding, and even spalling. Contemplated are coating systems with graded materials and/or structures, which will be very effective in reducing CTE mismatch and consequently will improve coating reliability and longevity.

In another exemplary embodiment, a method for adding an intermediate layer (interlayer) between an underlayer (i.e. bondcoat or TBC coat) and an abradable top layer is provided. The intermediate layer will contain less fugitive phase and lower porosity and is more adhesive to the under-layer relative to the abradable top layer. This multiple-layered structure increases coating CTE match and thus enhances coating adhesion.

In yet another exemplary embodiment, a method for producing an abradable coating with a continuously graded structure is provided. The fugitive phase content will increase gradually, and conversely, the coating density will decrease gradually toward the coating surface. Therefore, the graded abradable coating changes in both microstructure and chemistry and can provide the advantages of high bond strength, high strain tolerance, and better functionality when compared to a traditional two or three layered abradable coating.

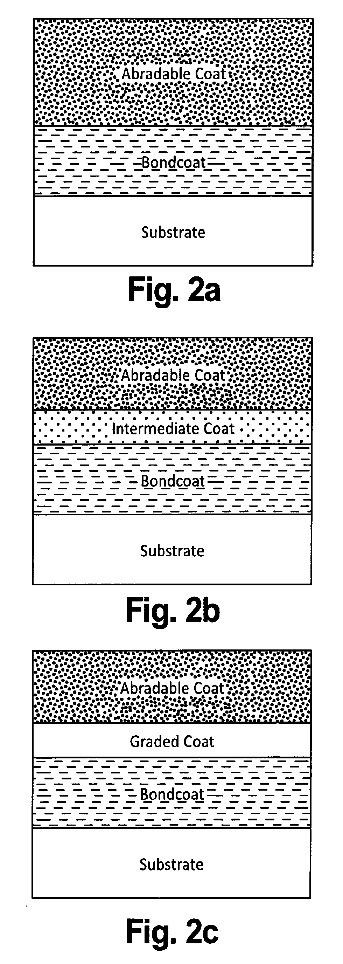

In a further exemplary embodiment, an intermediate layer is deposited onto an underlaid coat (such as metallic bondcoat or ceramic TBC) prior to applying an abradable coating. The starting material used for the intermediate layer (inter-layer) can be the same as the abradable layer, the mixture of underlayer and abradable materials or a different material, and preferably contains a ceramic matrix and an organic fugitive phase. As deposited, the interlayer coat will have a low fugitive phase content and high coating density relative to the abradable coating, as shown in Figures 2a and 2b. Thermal spray is used to fabricate the coating with two sets of process parameters for the interlayer and abradable layer, respectively, and a better melting condition is used for interlayer deposition. The decrease in fugitive phase content and coating porosity in the interlayer will enhance its bond strength to the underlayer and cohesion strength, as well as CTE match in the coating system. Meanwhile, the thermal management method described above can be applied to prevent cracking during the process.

In yet another exemplary embodiment, instead of depositing an intermediate layer onto an underlaid coat prior to applying an abradable coating as described above, a continuously graded layer can be applied for further improving coating adhesion. As shown in Figure 2c, a continuous change in coating composition and density will provide a better CTE match at the interface of the underlayer and the graded layer as well as between the interface of the abradable layer and interlayer. As a result, the coating adhesion at the interfaces can be enhanced effectively. Thermal spray processes are developed to continuously apply the graded coating and abradable coating. Meanwhile, the thermal management method described herein can be applied to prevent cracking during the process.

The described methods demonstrate some unique aspects and advantages over existing abradable coating techniques, for example, a crack-free coating as described in this disclosure: (1) reduces the risk of early coating failure due to cracking, debonding, buckling, peeling, and spelling; (2) enhances bond strength, increases coating adhesion, and prolongs the life of the coating by providing a closer match in CTEs and a better match in microstructure; (3) improves coating performance, increases coating integrity and durability when exposed to post heat treatment and operative environment at high temperature; and (4) utilizes an efficient process method-the coating can be produced readily by retrofitting a thermal spray setup.

The above disclosure generally describes the present invention. A more complete understanding can be obtained by reference to the following specific examples, which are provided for purposes of illustration only and are not intended to limit the scope of the invention.

### EXAMPLES

The structures, materials, compositions, and methods described herein are intended to be representative examples of the invention, and it will be understood that the scope of the invention is not limited by the scope of the examples. Those skilled in the art will recognize that the invention may be practiced with variations on the disclosed structures, materials, compositions and methods, and such variations are regarded as within the ambit of the invention.

The following examples illustrate various exemplary embodiments of the methods described in this disclosure:

### Example 1: Crack-free abradable coating applied on HVOF-formed MCrAlY bondcoat.

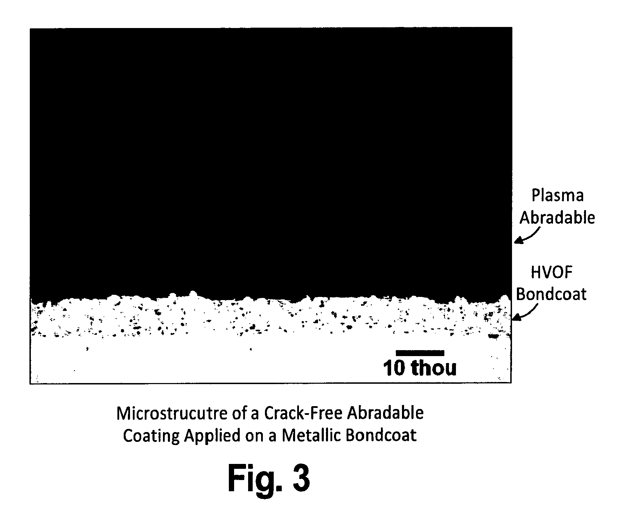

■ Coating system: MCrAlY bondcoat + ZrO2-polymer abradable topcoat
■ Equipment: Sulzer Metco 9MB plasma gun system, dual air jet used.
■ Controlled Temperature: Preheating Tp<300°F; Coating Tc<600°F.
■ Results: Microstructure without cracks (see Figure 3)

### Example 2: Crack-free abradable coating applied on Inconel 714 substrate.

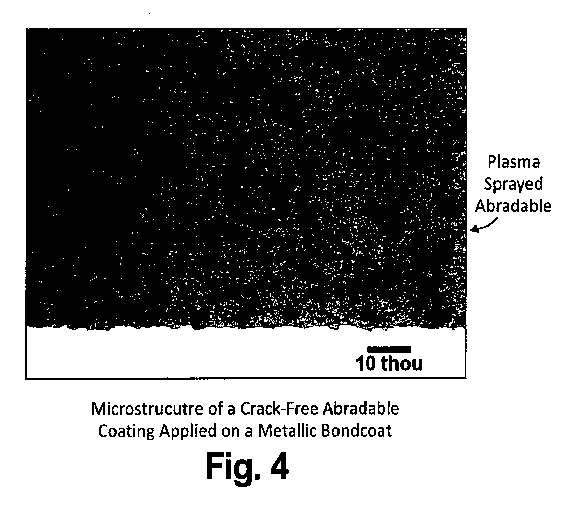

■ Coating system: ZrO2-polymer abradable topcoat
■ Equipment: Sulzer Metco 9MB plasma gun system, dual air jet used
■ Controlled Temperature: Preheating Tp<300°F; Coating Tc<600°F
■ Results: Microstructure without cracks (see Figure 4)

**Example 3: Crack-free abradable coating (higher porosity) applied on lnconel 714 substrate.**

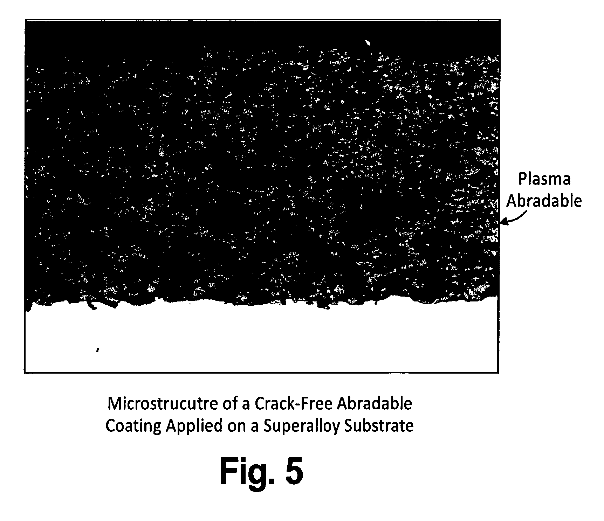

■ Coating system: ZrO2-polymer abradable topcoat
■ Equipment: Sulzer Metco 9MB plasma gun system, dual air jet used
■ Controlled Temperature: Preheating Tp<300°F; Coating Tc<600°F
■ Results: Microstructure without cracks (see Figure 5)

### Example 4: Crack-free abradable coating applied on plasma-formed MCrAlY bondcoat and DVC-TBC coat.

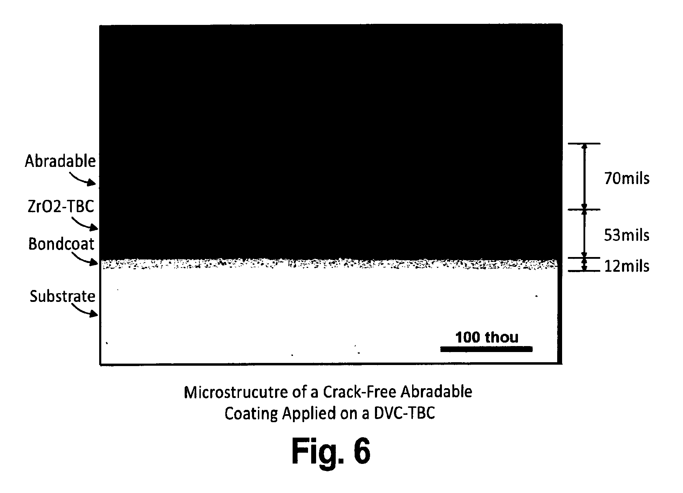

■ Coating system: DVC-TB8C + ZrO2-polymer abradable topcoat.
■ Equipment: Sulzer Metco 9MB plasma gun system, dual air jet used.
■ Controlled Temperature: Preheating Tp<300°; Coating Tc<600°F.
■ Results: Microstructure without cracks and adhesive (see Figure 6)

### Example 5: Crack-free abradable coating with a denser intermediate layer on plasma-formed MCrAlY bondcoat and DVC-TBC cost.

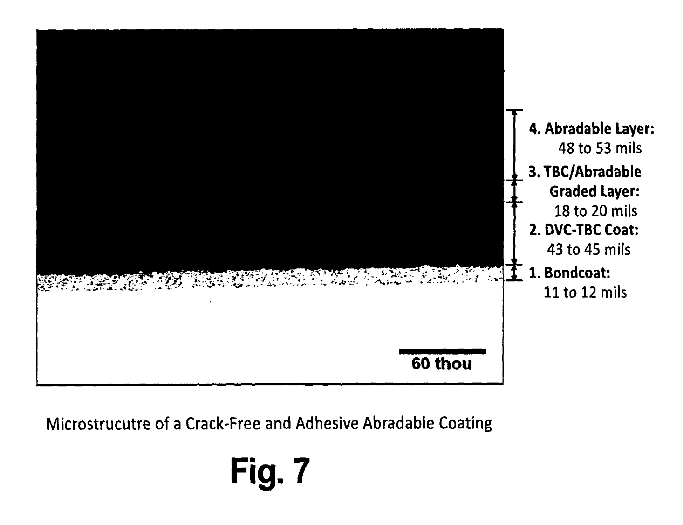

■ Coating system: DVC-TBC + ZrO2-polymer abradable topcoat.
■ Equipment: Sulzer Metco 9MB plasma gun system, dual air jet used.
■ Controlled Temperature: Preheating Tp<300°F; Coating Tc<600°F.
■ Results: Microstructure without cracks and well adhered coating as shown in Figure 7.

### Example 6: Crack-free and graded abradable coating on plasma-formed MCrAlY bondcoat and TBC coat made the following process, wherein the spray distance is increased gradually at a constant power input.

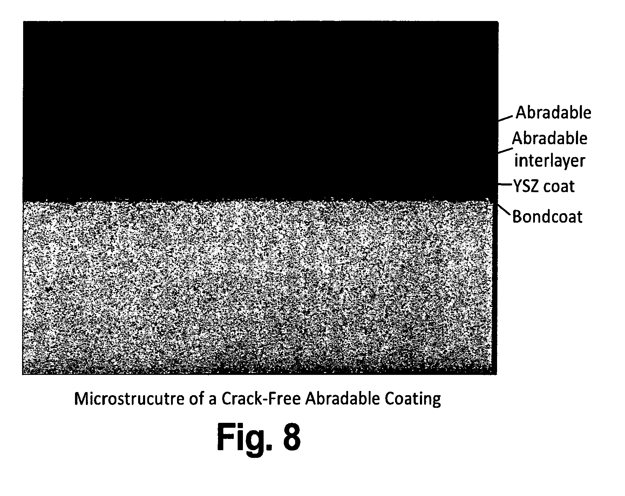

■ Coating system: DVC-TBC + ZrO2-polymer abradable topcoat.
■ Equipment: Sulzer Metco 9MB plasma gun system, dual air jet used.
■ Controlled Temperature: Preheating Tp<300°F; Coating Tc<600°.
■ Results: Microstructure without cracks and well adhered coating ( Figure 8).

### Example 7: Crack-free and graded abradable coating on HVOF-formed MCrAlY bondcoat and Plasma-formed TBC coat made by the following process, wherein the primary plasma gas is changed gradually at a constant spray distance.

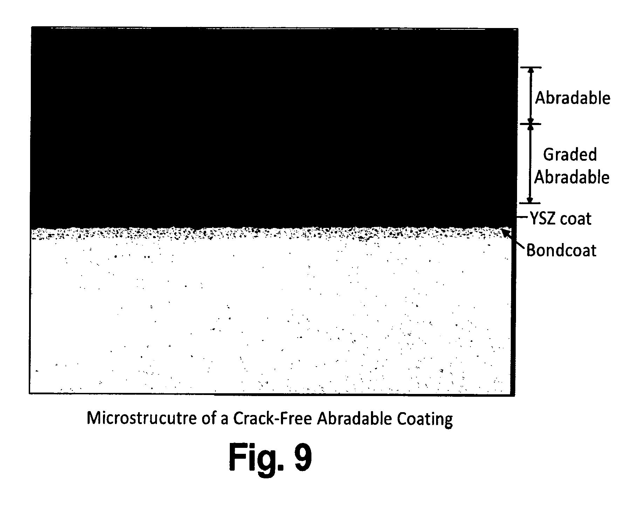

■ Coating system: DVC-TBC + ZrO2-polymer abradable topcoat.
■ Equipment: Sulzer Metco 9MB plasma gun system, dual air jet used.
■ Controlled Temperature: Preheating Tp<300°F; Coating Tc<600°F.
■ Results: Microstructure without crack, well adhered coating and graded microstructure in the graded abradable layer as shown in Figure 9.

Although the methods and compositions of the subject invention have been described with respect to preferred embodiments, those skilled in the art will readily appreciate that changes and modifications may be made thereto without departing from the spirit and scope of the subject invention as defined by the appended claims.

## Claims

1. A method for producing a crack-free abradable coating, comprising: applying an abradable material directly or indirectly via an intermediate layer to a substrate, wherein the abradable material is maintained at a temperature that is lower than the critical coating temperature as it is being applied to the substrate or intermediate layer, thereby forming a crack-free abradable coating.

2. The method according to claim 1, wherein the substrate is a metal, alloy or ceramic.

3. The method according to claim 1, wherein the substrate is a component of a gas turbine engine.

4. The method according to claim 1, wherein the abradable material comprises a fugitive component and a metallic or ceramic matrix component.

5. The method according to claim 1, wherein the step of applying the abradable material comprises Thermal spraying of the abradable material.

6. The method according to claim 5, wherein the thermal spraying is plasma spraying.

7. The method according to claim 5, wherein the thermal spraying is high-velocity oxygen-fuel (HYOF) spraying.

8. The method according to claim 1, wherein the critical coating temperature is determined experimentally.

9. The method according to claim 1, wherein the critical coating temperature is determined experimentally prior to commencing the method by:
(a) applying the abradable material to the substrate while maintaining the abradable material at a constant coating temperature, thereby forming an abradable coating;
(b) cooling the abradable coating;
(c) inspecting the abradable coating to determine the presence or absence of cracks, and
(d) repeating steps (a)-(c) over a range of constant coating temperatures, wherein the highest coating temperature at which cracks are not detected is the critical coating temperature.

10. The method according to claim 9, wherein the range of constant temperatures is from about 300°F to about 2300°F.

11. The method of claim 1, wherein the one or more intermediate layers is selected from the group consisting of a bondcoat, a thermal barrier coat (TBC), a thermally grown oxide coat, and a ceramic coat.

12. The method of claim 1, wherein the one or more intermediate layers has a graded composition and porosity.

13. The method of claim 1, wherein the one or more intermediate layers has an even composition and porosity.

14. The method of claim 1, wherein the abradable coating is formed at a thickness of about between 0.1 to 1.0 millimeters, or about between 0.5 to 5 millimeters, or about between 1.0 to 50 millimeters or more.

15. The method of any preceding claim, further comprising applying a bondcoat to the substrate, and optionally applying the intermediate layer to the bondcoat.
